# FASCICULE DE BREVET EUROPEEN

(11) **EP 4 087 784 B1**
(45) Date de publication et mention de la délivrance du brevet: **28.02.2024**
(21) Numéro de dépôt: 21705235.6
(22) Date de dépôt: 05.01.2021
(51) Int. Cl.: B64D 27/26, B64C 3/32, F01D 25/28

(54) **ASSEMBLAGE ENTRE UN PYLÔNE D'AÉRONEF ET UNE TURBOMACHINE**
ANORDNUNG ZWISCHEN EINEM FLUGZEUGMAST UND EINER TURBOMASCHINE
ASSEMBLY BETWEEN AN AIRCRAFT PYLON AND A TURBOMACHINE

(30) Priorité: 10.01.2020 FR 2000245
(43) Date de publication de la demande: 16.11.2022
(73) Titulaire: SAFRAN AIRCRAFT ENGINES, 75015 Paris (FR)
(72) Inventeur: GLEMAREC, Guillaume, 77550 MOISSY-CRAMAYEL (FR); SEIZE, Guilhem, 77550 MOISSY-CRAMAYEL (FR); MAINGRE, Eric François Michel, 77550 MOISSY-CRAMAYEL (FR); VIGNES, Jean-Baptiste, 77550 MOISSY-CRAMAYEL (FR)
(74) Mandataire: Gevers & Orès
(86) Numéro de dépôt international: PCT/FR2021/050007
(87) Numéro de publication internationale: WO 2021/140294

(56) Documents cités:
- FR-A1- 2 965 796
- FR-A1- 3 039 204
- US-A1- 2015 175 268

## Description

### DOMAINE TECHNIQUE

La présente invention se rapporte à la suspension d'une turbomachine d'aéronef à un pylône d'aéronef.

### TECHNIQUE ANTÉRIEURE

L'arrière-plan technique comprend notamment le document FR 3 039 204 A1 qui divulgue un assemblage pour le montage d'une nacelle sur un aéronef comprenant un pylône. L'assemblage comprend une interface avant et une interface arrière montées dans des liaisons pivot coulissantes, l'axe de la liaison pivot étant parallèle à l'orientation longitudinale de la nacelle. D'autres documents de l'art antérieur comprennent le document US 2015/175268 A1, qui divulgue une suspension arrière pour le montage d'un moteur d'avion sur un aéronef. Le moteur ne peut se déplacer qu'en translation le long d'un axe longitudinal X et en pivotant autour dudit axe longitudinal X.

De manière classique, une turbomachine d'aéronef, par exemple de type turboréacteur, comprend d'amont en aval dans le sens d'écoulement des gaz, une soufflante, au moins un compresseur, une chambre de combustion, et au moins une turbine. Chaque élément de la turbomachine est généralement entouré d'un carter, tel qu'un carter de soufflante entourant la soufflante, un carter de turbine entourant la ou les turbines, et un carter d'échappement disposé à l'aval de la turbine.

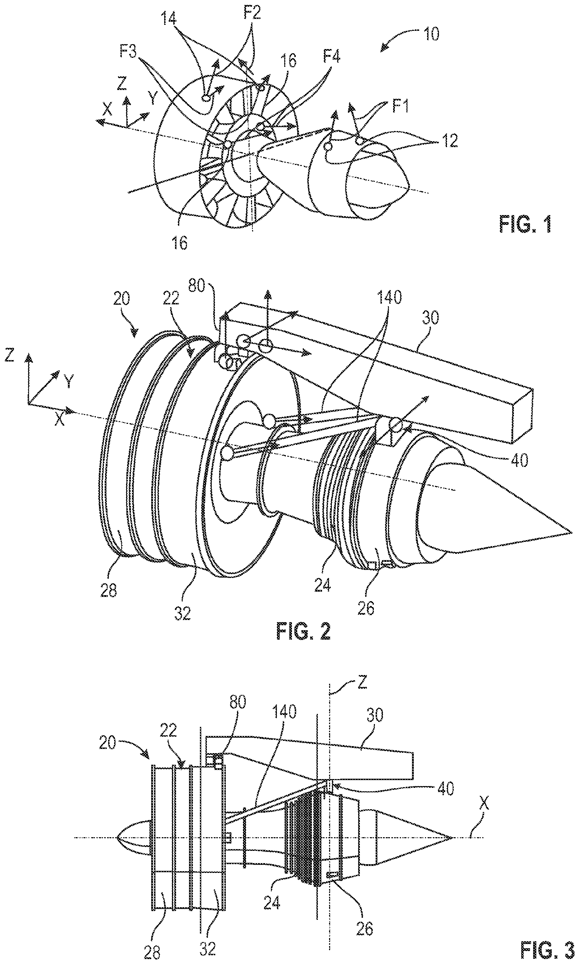

La turbomachine est accrochée sous l'aile de l'aéronef par des suspensions. Comme représenté sur la figure 1, représentant une turbomachine 10 s'étendent longitudinalement selon un axe X, transversalement selon un axe Y et verticalement selon un axe Z, la turbomachine est accrochée par :
- à l'arrière (i.e. à l'aval) du moteur, une suspension 12 sur le carter d'échappement du moteur, qui reprend deux degrés de liberté (selon les axes Y et Z, représenté par les flèches F1),
- à l'avant (i.e. à l'amont) du moteur, une suspension 14 qui reprend les quatre degrés de liberté restant (selon les axes Y et Z, représenté par les flèches F2, et reprise des couples moteur selon les axes X et Y, représenté par les flèches F3), et
- deux bielles 16 de reprise de la poussée du moteur, qui reprennent uniquement un degré de liberté (selon l'axe X, représenté par les flèches F4).

Toutefois, les suspensions d'accrochage du moteur ne sont pas complètement alignées avec la poussée de ce dernier, ce qui génère des charges verticales importantes. Il en résulte un moment de flexion de l'arbre moteur et des carters entourant ce dernier, et par conséquent des jeux de fonctionnement internes au moteur, ce qui pénalise le rendement de ce dernier.

Cette déformation peut aussi être accentuée par la dilatation du moteur, qui s'allonge avec la hausse de la température en fonctionnement, alors que le pylône d'aéronef reste à iso-longueur (selon l'axe X).

Différentes méthodes pour atténuer cette flexion ont été mises en place, comme par exemple la variation des angles des bielles de reprise de la poussée, afin de minimiser les efforts verticaux sur la suspension arrière dus à la poussée du moteur.

La demande de brevet français FR 3 058 127 A1 décrit un assemblage entre un pylône structurel d'aéronef et une turbomachine d'aéronef, qui comporte une poutre attachée à la turbomachine et dans laquelle est montée une rotule. La poutre comporte des oreilles de suspension comportant chacune un alésage de passage d'un axe. L'axe traverse également un alésage formé dans le pylône, de sorte à relier la poutre au pylône. Un plot solidaire du pylône coopère avec la rotule de la poutre. Au niveau d'une suspension arrière, la poutre présente un orifice oblong s'étendant selon l'axe longitudinal X de la turbomachine, et dans lequel un doigt solidaire du pylône est engagé avec un jeu. Cet orifice oblong est destiné à être intégralement consommé en situation de sécurité accrue (« *fail safe* » en terminologie anglaise) pour transmettre la poussée (selon l'axe X), et permet également la dilatation du moteur (selon l'axe X), avant une consommation intégrale du jeu.

La demande de brevet français FR 3 015 434 A1 décrit une suspension d'un moteur d'aéronef à une structure porteuse de cet aéronef. La suspension arrière comporte deux montants formant une chape et étant reliés entre eux par une glissière sur laquelle est monté libre un galet qui coulisse entre les montants formant butées, tout en se déplaçant en roulant dans une lumière oblongue (s'étendant selon un axe transversal Y) d'une oreille du carter d'échappement du moteur. Cette suspension arrière permet de répondre notamment à une problématique de dilatation thermique. Un allongement selon l'axe longitudinal X du moteur (i.e. une dilatation) et une rotation autour de l'axe X (i.e. un couple) sont autorisés, mais le moteur ne peut se déplacer selon l'axe vertical Z en zone arrière du moteur. Ceci a pour effet de contraindre l'axe moteur, qui va se plier dans les carters entourant le moteur (via les paliers supportant l'axe moteur), qui eux sont bloqués selon l'axe Z. Un jeu de fonctionnement entre l'axe moteur et les carters est donc prévu, ce qui nuit aux performances du moteur.

L'invention a pour objectif de proposer une solution permettant de laisser le moteur d'aéronef se dilater axialement et se déformer verticalement, sans exercer de contraintes sur les carters qui l'entoure, et ainsi permettant de réduire les jeux de fonctionnement internes au moteur, et donc permettant d'améliorer le rendement du moteur.

### RÉSUMÉ DE L'INVENTION

À cet effet, l'invention concerne un assemblage entre un pylône d'aéronef et une turbomachine d'axe longitudinal X, le pylône et la turbomachine comportant chacun des zones longitudinales avant et arrière, l'assemblage comportant un support arrière configuré pour relier la zone arrière de la turbomachine à la zone arrière du pylône, l'assemblage étant caractérisé en ce que le support arrière comporte une liaison pivot glissant agencée entre la zone arrière de la turbomachine et la zone arrière du pylône de manière à autoriser à la turbomachine seulement des mouvements de translation et de rotation selon l'axe longitudinal X et des mouvements de translation et de rotation selon un axe vertical Z et un mouvement de rotation selon un axe transversal Y.

Selon l'invention, le support arrière réagit uniquement à des forces dans la direction latérale Y. Le support arrière selon l'invention permet ainsi de bloquer un mouvement de translation du moteur suivant l'axe transversal Y.

Le support arrière, qui est accroché au pylône d'aéronef, transmet la poussée (selon l'axe longitudinal X), et a aussi un rôle de butée latérale pour la zone arrière du moteur. L'invention permet avantageusement de laisser le moteur se dilater axialement et se déformer verticalement, sans exercer de contraintes sur les carters qui l'entourent, et ainsi de limiter la déformation vis-à-vis des pièces tournantes internes. Avantageusement, l'invention permet d'avoir des mouvements du stator et du rotor du moteur, sans contraintes, ce qui permet de réduire les jeux de fonctionnement internes, et donc améliorer le rendement du moteur.

La zone arrière de la turbomachine comprend un carter d'échappement. La liaison pivot glissant est agencée entre le carter d'échappement et le pylône d'aéronef, afin de laisser le moteur se déformer (par les contraintes de poussée et de vol) et se dilater (par la température).

Dans la suite de la description, les termes « turbomachine » et « moteur » sont utilisés indifféremment l'un de l'autre pour désigner la turbomachine.

Selon un mode de réalisation, la turbomachine comporte un axe lisse s'étendant selon l'axe longitudinal X, et le pylône présente une lumière orientée selon l'axe vertical Z. La liaison pivot glissant est formée par l'axe lisse de la turbomachine qui est configuré pour coulisser dans la lumière du pylône. L'axe lisse peut être lié à une turbine de la turbomachine.

Selon un autre mode de réalisation, le pylône comporte un axe lisse s'étendant selon l'axe longitudinal X, et la turbomachine présente une lumière orientée selon l'axe vertical Z. La liaison pivot glissant est formée par l'axe lisse du pylône qui est configuré pour coulisser dans la lumière de la turbomachine. La lumière peut être formée dans une turbine de la turbomachine.

La lumière de la turbomachine ou du pylône peut être de forme rectangulaire ou oblongue.

La lumière est orientée suivant l'axe vertical Z, afin de laisser libre les mouvements verticaux du moteur (translation et rotation), et ne bloquer que le mouvement de translation selon l'axe transversal Y. La forme de la lumière oblongue permet un blocage latéral selon l'axe Y, mais autorise une rotation et translation du moteur selon les axes X et Z.

La lumière est agencée de sorte que sa dimension selon l'axe vertical Z est plus importante que sa dimension selon l'axe transversal Y. La forme de la lumière permet d'avoir un contact entre l'axe lisse et la lumière selon l'axe transversal Y.

L'assemblage peut comporter des butées mécaniques agencées aux extrémités de l'axe lisse de la turbomachine ou du pylône. Ces butées sont configurées pour limiter le déplacement de la turbomachine selon l'axe vertical Z.

Les butées mécaniques sont nécessaires pour limiter les déplacements du moteur lors de cas de charges exceptionnels, tels qu'une perte d'aubes, un atterrissage dur, ou un atterrissage sur le ventre de l'aéronef.

Avantageusement, les butées mécaniques sont configurées pour éviter tout décrochage de l'assemblage.

L'assemblage peut comporter des moyens élastiques configurés pour exercer un effort selon l'axe transversal Y sur l'axe lisse de la turbomachine ou du pylône. Les moyens élastiques peuvent être du type poussoir ou rotatif. Les moyens élastiques peuvent comporter un ressort de rappel qui exerce constamment un effort selon l'axe transversal Y, de manière à limiter le jeu entre l'axe lisse et les parois verticales de la lumière.

Ces moyens élastiques forment un système de rattrapage de jeux automatique, pour éviter les mouvements parasites de l'axe lisse selon l'axe transversal Y et autoriser un déplacement angulaire autour de l'axe transversal Y de ce dernier.

Avantageusement, les jeux nécessaires aux déplacements et aux déformations du moteur sont calculés pour éviter tout décrochage de l'assemblage.

Afin de favoriser une sécurité accrue (« *safe-life* » en terminologie anglaise), et éviter une défaillance du support arrière, l'axe lisse peut comprendre au moins deux tubes concentriques, chaque tube étant configuré pour tenir des charges limites.

Afin de favoriser une sécurité accrue (« *fail safe* »), l'axe lisse peut être configuré pour tenir des charges ultimes, et pour conserver ses capacités d'origine durant toute la durée de vie de l'aéronef.

L'assemblage peut également comporter un support avant configuré pour relier la zone avant de la turbomachine à la zone avant du pylône. Le support avant comporte des premières chapes de suspension s'étendant selon l'axe transversal Y et l'axe vertical Z, et des premières biellettes s'étendant selon l'axe transversal Y et l'axe vertical Z, et formant une liaison articulée avec les premières chapes de suspension, les premières biellettes étant insérées dans les premières chapes de suspension et traversées par des premiers axes s'étendant selon l'axe longitudinal X.

Afin de favoriser une sécurité accrue (« *fail safe* »), le support avant peut également comporter des deuxièmes chapes de suspension s'étendant selon l'axe longitudinal X et l'axe vertical Z, et des deuxièmes biellettes s'étendant selon l'axe longitudinal X et l'axe vertical Z, et formant une liaison articulée avec les deuxièmes chapes de suspension, les deuxièmes biellettes étant insérées dans les deuxièmes chapes de suspension et traversées par des deuxièmes axes s'étendant selon l'axe transversal Y.

La zone avant de la turbomachine comporte un carter intermédiaire. Ainsi, selon l'invention, la turbomachine est suspendue par son carter intermédiaire, en partie haute, par l'intermédiaire d'un support avant fixé sur le pylône d'aéronef, et d'un support arrière fixé sur une zone arrière du pylône (il n'y a pas d'accrochage du moteur à l'arrière).

Le support avant peut s'accrocher sur le carter intermédiaire, ou sur une virole de carter intermédiaire (VCI), ou au pied des aubes directrices de flux de sortie (OGV, acronyme de « *Outlet Guide Vane* »). De préférence, la turbomachine est suspendue par son carter intermédiaire, ou par une VCI, dans la zone avant du moteur, de sorte à supprimer tous les degrés de libertés à cette interface.

Le support avant réagit à des forces selon l'axe longitudinal X, selon l'axe transversal Y et selon l'axe vertical Z, et à des moments (couples) d'axes X et Z.

Lorsque le support avant est configuré pour reprendre la poussée (selon l'axe longitudinal X), le support avant peut comprendre un système de reprise de la poussée composé d'un palonnier et de deux bielles.

En variante, le support avant peut comprendre un système de reprise de la poussée composé d'un pion s'étendant selon l'axe vertical Z et circulant dans une lumière oblongue s'étendant selon l'axe transversal Y.

L'assemblage peut également comporter deux bielles configurées pour relier la zone avant de la turbomachine au support arrière.

Selon l'invention, la poussée exercée par le moteur (force selon l'axe longitudinal X) est reprise par les deux bielles (également appelées bielles de reprise de poussée) entre le carter intermédiaire de la turbomachine et le pylône en zone arrière, et par un point du support avant entre le carter intermédiaire en zone avant et le pylône, et transmise à l'aéronef par le support arrière. Ainsi, le support arrière reprend la poussée du moteur via les bielles de reprise de poussée.

Selon l'invention, la poussée n'est pas reprise par la lumière orientée selon l'axe vertical Z, mais est reprise par la suspension avant.

La dimension de la lumière permet la flexion du corps du moteur librement (« *backbone bending* » en terminologie anglaise), et permet de réduire les jeux de fonctionnement. La dimension maximum de la lumière (limitée par les butées mécaniques) crée un contact vertical, et permet de limiter les contraintes en cas d'efforts ponctuels importants, tels que lors de chocs, ou d'un atterrissage dur.

Selon l'invention, il n'y a pas de reprise d'efforts selon l'axe vertical Z par la lumière, ce qui permet un déplacement moteur selon l'axe longitudinal X et selon l'axe vertical Z (limité par les dimensions de la lumière et les butées mécaniques), mais aussi une rotation suivant les axes X et Z. Ceci permet avantageusement aux carters du moteur et à l'axe moteur, une dilatation libre et une déformation ou flexion sans contraintes.

L'invention concerne également un ensemble propulsif d'un aéronef comportant une turbomachine d'axe longitudinal X, la turbomachine comportant des zones longitudinales avant et arrière, l'ensemble propulsif comportant également un assemblage selon l'invention et un capot agencé autour de la turbomachine, le capot étant solidaire de la turbomachine de sorte qu'un mouvement de la turbomachine entraîne un mouvement du capot.

Autrement dit, le capot est solidaire de la turbomachine de sorte qu'un mouvement de translation et/ou de rotation selon l'axe longitudinal X et/ou selon l'axe vertical Z et/ou un mouvement de rotation selon l'axe transversal Y de la turbomachine entraîne le même mouvement de translation et/ou de rotation du capot.

L'ensemble propulsif comporte ainsi le moteur, ainsi que la nacelle qui l'entoure, et donc les différents capots agencés autour du moteur.

L'invention concerne également un aéronef comportant un assemblage selon l'invention.

L'invention concerne également un aéronef comportant un ensemble propulsif selon l'invention.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1, déjà décrite, est une vue très schématique en perspective d'une turbomachine munie de suspensions, selon l'art antérieur,
- la figure 2 est une vue très schématique en perspective d'une turbomachine accrochée à un pylône d'aéronef par un assemblage selon l'invention,
- la figure 3 est une vue très schématique de côté d'une turbomachine accrochée à un pylône d'aéronef par un assemblage selon l'invention,
- la figure 4 est une vue très schématique en coupe d'une turbomachine accrochée à un pylône d'aéronef par un assemblage selon l'invention,
- la figure 5 est une vue très schématique de l'arrière suivant l'axe X (axe moteur) d'une partie arrière d'une turbomachine accrochée à un pylône d'aéronef par un assemblage selon l'invention,
- la figure 6 est une vue très schématique de la coupe A-A de la figure 5,
- la figure 7 est une vue très schématique de face d'un système de rattrapage de jeux automatique, du type poussoir,
- la figure 8 est une vue très schématique en coupe d'un système de rattrapage de jeux automatique, du type poussoir,
- la figure 9 est une vue très schématique de face d'un système de rattrapage de jeux automatique, du type rotatif,
- la figure 10 est une vue très schématique en perspective d'un support avant d'un assemblage selon un premier mode de réalisation de l'invention,
- la figure 11 est une vue très schématique de côté d'une partie avant d'une turbomachine accrochée à un pylône d'aéronef par un assemblage selon le premier mode de réalisation de l'invention,
- la figure 12 est une vue très schématique de dessus d'une partie avant d'une turbomachine accrochée à un pylône d'aéronef par un assemblage selon le premier mode de réalisation de l'invention,
- la figure 13 est une vue très schématique en perspective d'un support avant d'un assemblage selon un deuxième mode de réalisation de l'invention,
- la figure 14 est une vue très schématique de côté d'une partie avant d'une turbomachine accrochée à un pylône d'aéronef par un assemblage selon le deuxième mode de réalisation de l'invention,
- la figure 15 est une vue très schématique de dessus d'une partie avant d'une turbomachine accrochée à un pylône d'aéronef par un assemblage selon le deuxième mode de réalisation de l'invention,
- la figure 16 est une vue très schématique en perspective d'un support avant d'un assemblage selon un troisième mode de réalisation de l'invention,
- la figure 17 est une vue très schématique de côté d'une partie avant d'une turbomachine accrochée à un pylône d'aéronef par un assemblage selon le troisième mode de réalisation de l'invention, et
- la figure 18 est une vue très schématique de dessus d'une partie avant d'une turbomachine accrochée à un pylône d'aéronef par un assemblage selon le troisième mode de réalisation de l'invention.

Les éléments ayant les mêmes fonctions dans les différentes mises en oeuvre ont les mêmes références dans les figures.

### DESCRIPTION DES MODES DE RÉALISATION

Comme représenté sur les figures 2 et 3, une turbomachine 20 est suspendue à un pylône 30, sous une aile de l'aéronef. La turbomachine 20 s'étend longitudinalement selon un axe X, transversalement selon un axe Y et verticalement selon un axe Z. Le pylône 30 s'étend longitudinalement selon l'axe X. Le pylône 30 et la turbomachine 20 comportent chacun une zone longitudinale avant et une zone longitudinale arrière, dans le sens d'écoulement des gaz (selon l'axe X).

La turbomachine peut être un turbomoteur, un turboréacteur ou un turbopropulseur. La turbomachine peut comprendre, d'amont en aval dans le sens d'écoulement des gaz, une soufflante entourée d'un carter de soufflante 22, au moins un compresseur, une chambre de combustion, et au moins une turbine entourée d'un carter de turbine 24. Un carter d'échappement 26 est disposé à l'aval de la turbine. Le carter de soufflante 22 comporte un carter amont 28 entourant la soufflante autour de l'axe X et un carter intermédiaire 32 situé dans le prolongement axial du carter amont 28.

Le pylône 30 fixé sur le corps de la turbomachine 20, par exemple au niveau de son carter intermédiaire 32. Un pylône est un élément rigide, sensiblement parallélépipédique, et non déformable.

Un assemblage entre le pylône 30 et la turbomachine 20 comporte un support arrière 40 configuré pour relier la zone arrière de la turbomachine 20 à la zone arrière du pylône 30. Le support arrière 40 comporte une liaison pivot glissant agencée entre la zone arrière de la turbomachine 20 et la zone arrière du pylône 30 de manière à autoriser à la turbomachine 20 seulement des mouvements de translation et de rotation selon les axes X et Z, et un mouvement de rotation selon l'axe Y. La liaison pivot glissant est agencée pour bloquer un mouvement de translation de la turbomachine 20 suivant l'axe Y.

La liaison pivot glissant est agencée entre le carter d'échappement 26 et le pylône 30, afin de laisser la turbomachine 20 se déformer et se dilater. La turbomachine 20 peut ainsi se dilater axialement selon l'axe X et se déformer verticalement selon l'axe Z, sans exercer de contraintes sur les carters 22, 24, 26 qui l'entoure.

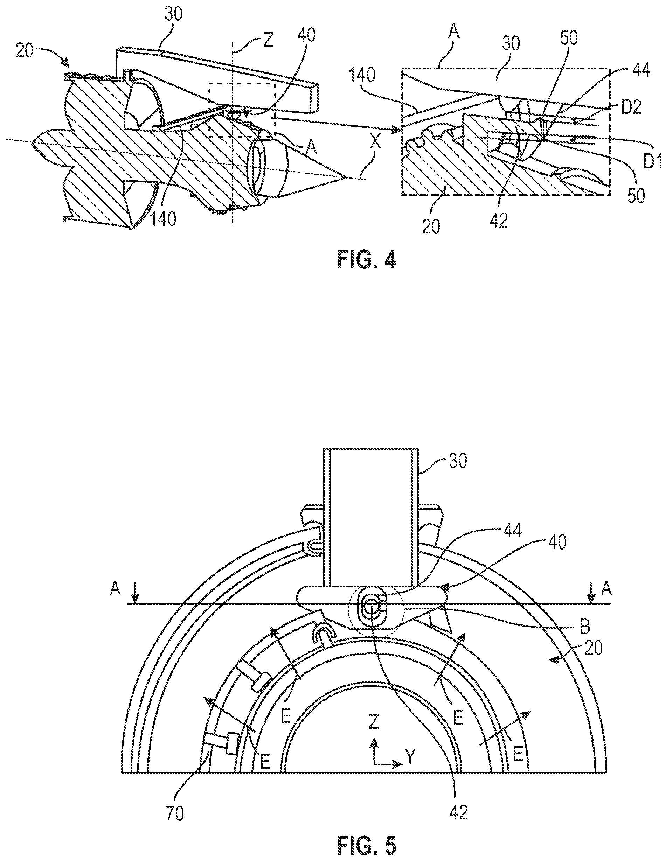

Selon un premier mode de réalisation représenté en figure 4, la turbomachine 20 peut comporter un axe lisse 42 (notamment visible dans l'encadré A, qui représente une vue agrandie de la portion entourée en pointillés sur la figure 4) s'étendant selon l'axe X, et le pylône 30 peut présenter une lumière 44 orientée selon l'axe Z. La liaison pivot glissant du support arrière 40 peut être formée par l'axe lisse 42 de la turbomachine 20 qui est configuré pour coulisser dans la lumière 44 du pylône 30.

L'axe lisse 42 peut être lié à la turbine de la turbomachine 20. L'axe lisse 42 a une forme générale cylindrique, à base circulaire. L'axe lisse 42 est un pion, qui est relié à une de ses extrémités à la turbomachine 20, et qui est libre à son autre extrémité.

Afin de favoriser une sécurité accrue (« *safe-life* »), l'axe lisse 42 peut comprendre deux tubes concentriques, un premier tube étant logé à l'intérieur d'un deuxième tube, chaque tube étant configuré pour tenir des charges limites.

Afin de favoriser une sécurité accrue (« *fai*/ *safe* »), l'axe lisse 42 peut être configuré pour tenir des charges ultimes, et pour conserver ses capacités d'origine durant toute la durée de vie de l'aéronef.

La lumière 44 a une forme générale rectangulaire ou oblongue. La lumière 44 est agencée de sorte que sa dimension selon l'axe Z est plus importante que sa dimension selon l'axe Y. La lumière est orientée suivant l'axe Z, afin de laisser libre les mouvements verticaux de la turbomachine 20, et ne bloquer que le mouvement de translation selon l'axe Y. La forme de la lumière 44 permet d'avoir un contact entre l'axe lisse 42 et la lumière 44 selon l'axe Y. Ainsi, la lumière 44 permet un blocage latéral selon l'axe Y, mais autorise une rotation et translation de la turbomachine 20 selon les axes X et Z.

Selon un deuxième mode de réalisation non représenté, le pylône 30 comporte l'axe lisse s'étendant selon l'axe X, et la turbomachine 20 présente une lumière orientée selon l'axe Z. Dans ce mode de réalisation, la liaison pivot glissant est formée par l'axe lisse du pylône 30 qui est configuré pour coulisser dans la lumière de la turbomachine 20. Les mêmes caractéristiques que celles présentées pour le premier mode de réalisation sont bien entendues applicables à ce deuxième mode de réalisation.

Comme représenté dans l'encadré A de la figure 4, l'assemblage peut comporter des butées mécaniques 50 agencées aux extrémités de l'axe lisse 42. Ces butées mécaniques 50 sont configurées pour limiter le déplacement de la turbomachine 20 selon l'axe Z. Les flèches D1 et D2 représentent les jeux de déplacement/déformation de la turbomachine 20 selon l'axe Z.

Les butées mécaniques 50 sont configurées pour éviter tout décrochage de l'assemblage.

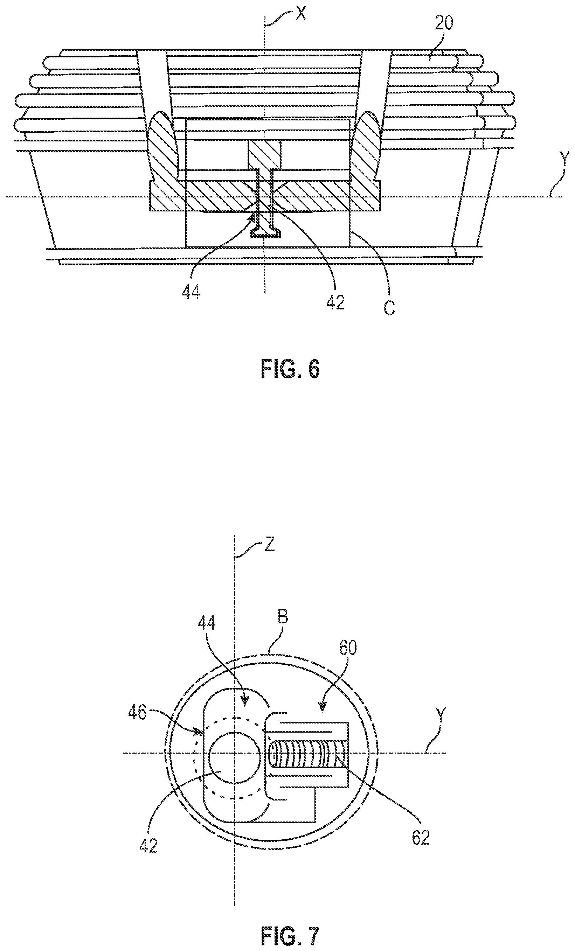

La figure 5 représente une vue de face de la turbomachine 20 comportant l'axe lisse 42, du pylône 30 présentant la lumière 44 et de l'assemblage selon l'invention. La figure 6 représente une coupe A-A de la figure 5.

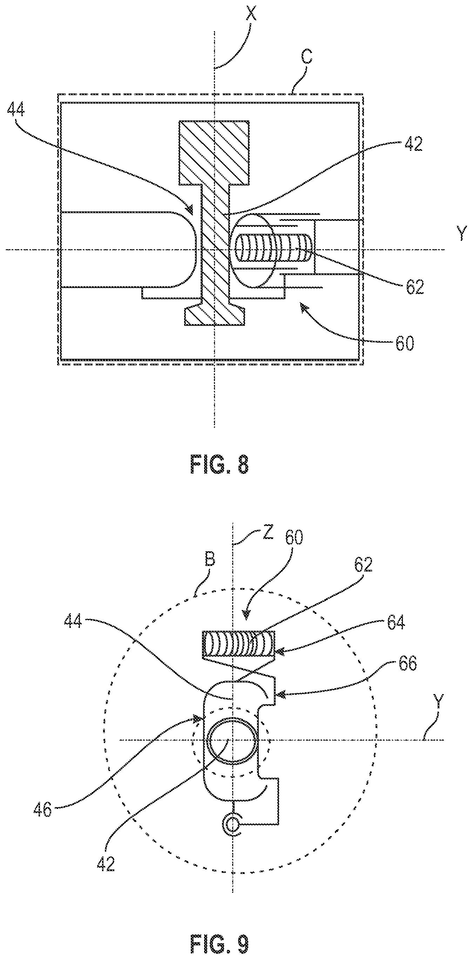

L'assemblage peut comporter des moyens élastiques 60 configurés pour exercer un effort selon l'axe Y sur l'axe lisse 42. Les moyens élastiques 60 forment un système de rattrapage de jeux automatique, pour éviter les mouvements parasites de l'axe lisse 42 selon l'axe Y et autoriser un déplacement angulaire autour de l'axe Y de ce dernier. Comme représenté sur la figure 7, qui est une vue agrandie d'un premier mode de réalisation de l'encadré B de la figure 5 et sur la figure 8, qui est une vue agrandie de l'encadré C de la figure 6, les moyens élastiques 60 peuvent être du type poussoir. Les moyens élastiques 60 peuvent comporter un ressort de rappel 62 s'étendant selon l'axe Y et étant configuré pour exercer un effort selon l'axe Y, de manière à limiter le jeu entre l'axe lisse 42 et les parois verticales 46 de la lumière 44.

Comme représenté sur la figure 9, qui est une vue agrandie d'un deuxième mode de réalisation de l'encadré B de la figure 5, les moyens élastiques 60 peuvent être du type rotatif. Les moyens élastiques 60 peuvent comporter un ressort de rappel 62 s'étendant selon l'axe Y et étant configuré pour exercer un effort selon l'axe Y, de manière à limiter le jeu entre l'axe lisse 42 et les parois verticales 46 de la lumière 44. Le ressort de rappel 62 peut être disposé au-dessus de la lumière 44, et relié à une de ses extrémités à une butée 64 et à l'autre extrémité à une plaque 66 qui transmet l'effort du ressort de rappel 62 selon l'axe Y sur l'axe lisse 42.

Le système de rattrapage de jeux automatique est configuré pour éviter tout décrochage de l'assemblage.

Comme représenté sur la figure 5, un capot 70 est agencé de façon solidaire autour de la turbomachine 20. En particulier, le capot 70 n'est pas accroché au pylône 30. Un mouvement de translation selon les axes X ou Z ou un mouvement de rotation selon les axes X, Y ou Z de la turbomachine 20 entraîne un mouvement identique du capot 70. Autrement dit, lorsque la turbomachine 20 se déforme, et donc se déplace (dans le sens des flèches E sur la figure 5), il entraîne le déplacement du capot 70 dans son mouvement.

L'assemblage peut également comporter un support avant 80 configuré pour relier la zone avant de la turbomachine 20 à la zone avant du pylône 30.

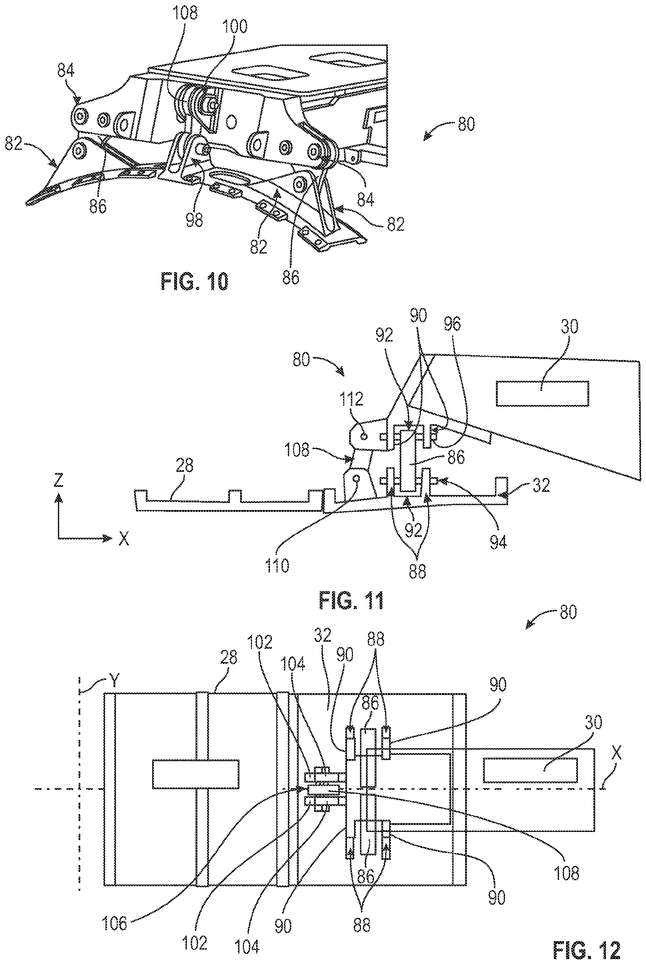

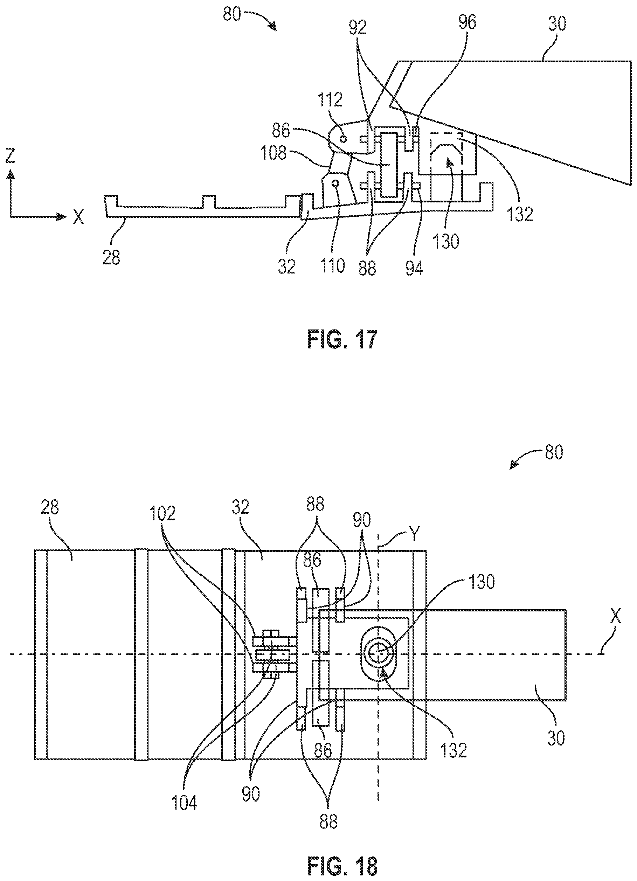

Comme représenté sur les figures 10 à 18, le support avant 80 comporte des premières chapes de suspension 82, 84. Une chape de suspension 82, 84 est composée de deux montants verticaux 88, 90, qui s'étendent dans un plan contenant les axes Y et Z. Les montants verticaux 88, 90 sont réunis par paire, selon l'axe X, de sorte qu'un espace 92 axial entre les deux montants verticaux 88, 90 est formé.

Le support avant 80 comporte des premières biellettes 86 formant des liaisons articulées avec les chapes de suspension 82, 84. Les biellettes 86 s'étendent dans un plan contenant les axes Y et Z. Les biellettes 86 sont insérées dans les chapes de suspension 82, 84, et plus précisément dans l'espace 92 entre les deux montants verticaux 88, 90 d'une chape de suspension 82, 84. Les biellettes 86 sont traversées par des axes 94, 96 s'étendant selon l'axe X.

Les chapes de suspension 82 sont reliées au carter intermédiaire 32 de la turbomachine 20, tandis que les chapes de suspension 84 sont reliées au pylône 30. Les axes 94 relient les biellettes 86 aux chapes de suspension 82 de la turbomachine 20 et les axes 96 relient les biellettes 86 aux chapes de suspension 84 du pylône 30.

Afin de favoriser une sécurité accrue (« *fail safe* »), le support avant 80 comporte des deuxièmes chapes de suspension 98, 100. Une chape de suspension 98, 100 est composée de deux montants verticaux 102, 104, qui s'étendent dans un plan contenant les axes X et Z. Les montants verticaux 102, 104 sont réunis par paire, selon l'axe Y, de sorte qu'un espace 106 axial entre les deux montants verticaux 102, 104 est formé.

Le support avant 80 comporte des deuxièmes biellettes 108 formant des liaisons articulées avec les chapes de suspension 98, 100. Les biellettes 108 s'étendent dans un plan contenant les axes X et Z. Les biellettes 108 sont insérées dans les chapes de suspension 98, 100, et plus précisément dans l'espace 106 entre les deux montants verticaux 102, 104 d'une chape de suspension 98, 100. Les biellettes 108 sont traversées par des axes 110, 112 s'étendant selon l'axe Y.

La chape de suspension 98 est reliée au carter intermédiaire 32 de la turbomachine 20, tandis que la chape de suspension 100 est reliée au pylône 30. L'axe 110 relie la biellette 108 à la chape de suspension 98 de la turbomachine 20 et l'axe 112 relie la biellette 108 à la chape de suspension 100 du pylône 30.

La turbomachine 20 est ainsi suspendue par son carter intermédiaire 32, en partie haute, par l'intermédiaire du support avant 80 qui est fixé sur le pylône 30, de sorte à supprimer tous les degrés de libertés à cette interface. Le support avant 80 peut également s'accrocher sur une VCI, ou au pied d'une OGV.

Le support avant 80 réagit à des forces selon les axes X, Y et Z, et à des moments d'axes X et Z.

Le support avant 80 peut être configuré pour reprendre la poussée (selon l'axe X).

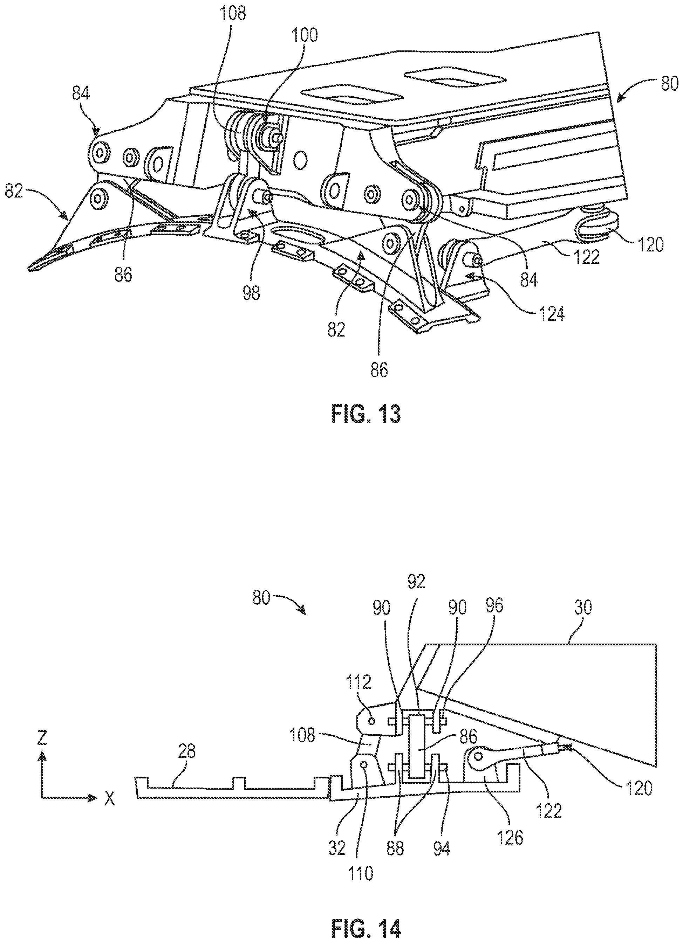

Comme représenté en figures 13 à 15, le support avant 80 peut en outre comprendre un système de reprise de la poussée composé d'un palonnier 120 et de deux bielles 122. Les bielles 122 sont accrochées, via une chape de suspension 124 composée d'un montant vertical 126, qui s'étend dans un plan contenant les axes X et Z, à une extrémité à la turbomachine 20, et à l'autre extrémité au palonnier 120, qui est accroché au pylône 30.

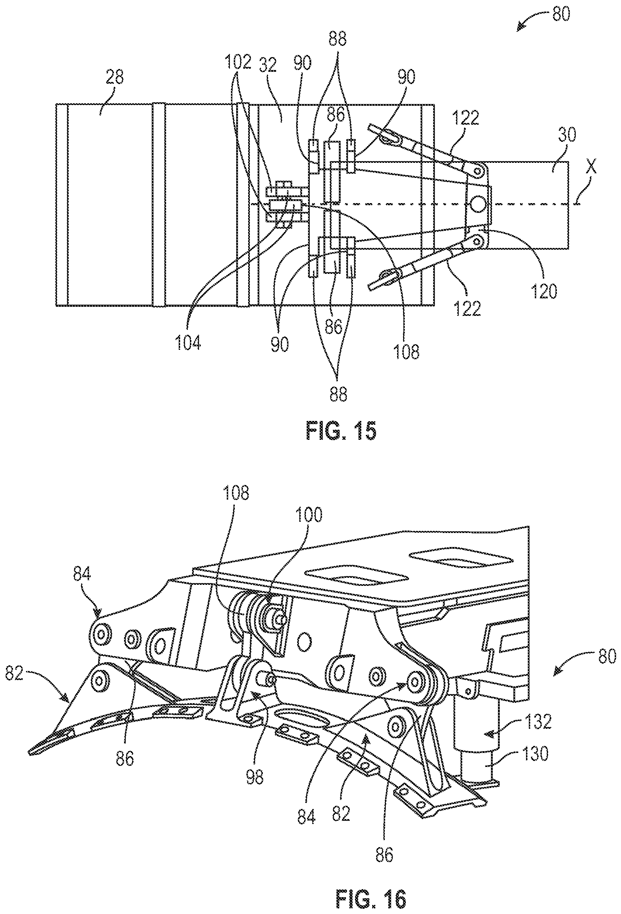

Comme représenté en figures 16 à 18, le support avant 80 peut en outre comprendre un système de reprise de la poussée composé d'un pion 130 s'étendant selon l'axe Z et circulant dans une lumière oblongue 132 s'étendant selon l'axe Y. Le pion 130 est accroché à la turbomachine 20, et la lumière oblongue 132 est formée dans le pylône 30.

Comme représenté sur les figures 2 à 4, l'assemblage peut également comporter deux bielles 140 configurées pour relier la zone avant de la turbomachine 20 au support arrière 40. Les bielles 140 permettent une reprise de la poussée entre le carter intermédiaire 32 et le pylône 30 en zone arrière. La poussée est ensuite transmise à l'aéronef par le support arrière 40.

## Revendications

1. Assemblage pour être positionné entre un pylône (30) d'aéronef et une turbomachine (20) d'axe longitudinal (X), le pylône (30) et la turbomachine (20) comportant chacun des zones longitudinales avant et arrière, l'assemblage comportant un support arrière (40) configuré pour relier la zone arrière de la turbomachine (20) à la zone arrière du pylône (30), le support arrière (40) comportant une liaison pivot glissant pour être agencée entre la zone arrière de la turbomachine (20) et la zone arrière du pylône (30) de manière à autoriser à la turbomachine (20) seulement des mouvements de translation et de rotation selon l'axe longitudinal (X) et des mouvements de translation et de rotation selon un axe vertical (Z) et un mouvement de rotation selon un axe transversal (Y).

2. Assemblage selon la revendication 1, dans lequel la turbomachine (20) comporte un axe lisse (42) s'étendant selon l'axe longitudinal (X), et le pylône (30) présente une lumière (44) orientée selon l'axe vertical (Z), et dans lequel la liaison pivot glissant est formée par l'axe lisse (42) de la turbomachine (20) qui est configuré pour coulisser dans la lumière (44) du pylône (30).

3. Assemblage selon la revendication 1, dans lequel le pylône (30) comporte un axe lisse (42) s'étendant selon l'axe longitudinal (X), et la turbomachine (20) présente une lumière (44) orientée selon l'axe vertical (Z), et dans lequel la liaison pivot glissant est formée par l'axe lisse (42) du pylône (30) qui est configuré pour coulisser dans la lumière (44) de la turbomachine (20).

4. Assemblage selon l'une des revendications 2 ou 3, dans lequel la lumière (44) de la turbomachine (20) ou du pylône (30) est de forme rectangulaire ou oblongue.

5. Assemblage selon l'une des revendications 2 à 4, comportant des butées mécaniques (50) agencées aux extrémités de l'axe lisse (42) de la turbomachine (20) ou du pylône (30).

6. Assemblage selon l'une des revendications 2 à 5, comportant des moyens élastiques (60) configurés pour exercer un effort selon l'axe transversal (Y) sur l'axe lisse (42) de la turbomachine (20) ou du pylône (30).

7. Assemblage selon l'une des revendications 2 à 6, dans lequel l'axe lisse (42) comprend au moins deux tubes concentriques.

8. Assemblage selon l'une des revendications 1 à 7, comportant un support avant (80) configuré pour relier la zone avant de la turbomachine (20) à la zone avant du pylône (30), le support avant (80) comportant des chapes de suspension (82, 84) s'étendant selon l'axe transversal (Y) et l'axe vertical (Z), et des biellettes (86) s'étendant selon l'axe transversal (Y) et l'axe vertical (Z) et formant une liaison articulée avec les chapes de suspension (82, 84), les biellettes (86) étant insérées dans les chapes de suspension (82, 84) et traversées par des axes s'étendant selon l'axe longitudinal (X).

9. Ensemble propulsif d'un aéronef comportant une turbomachine (20) d'axe longitudinal (X), la turbomachine (20) comportant des zones longitudinales avant et arrière, l'ensemble propulsif comportant également un assemblage selon l'une des revendications 1 à 8 et un capot (70) agencé autour de la turbomachine (20), le capot (70) étant solidaire de la turbomachine (20) de sorte qu'un mouvement de la turbomachine (20) entraîne un mouvement du capot (70).

10. Aéronef comportant un assemblage selon l'une des revendications 1 à 8 ou un ensemble propulsif selon la revendication 9.

## Patentansprüche

1. Anordnung, die zwischen einem Flugzeugmast (30) und einer Turbomaschine (20) mit Längsachse (X) positioniert werden soll, wobei der Mast (30) und die Turbomaschine (20) jeweils eine vordere und eine hintere Längszone aufweisen, wobei die Anordnung einen hinteren Träger (40) umfasst, der dazu konfiguriert ist, die hintere Zone der Turbomaschine (20) mit der hinteren Zone des Masts (30) zu verbinden, wobei der hintere Träger (40) eine Gleitzapfenverbindung umfasst, um zwischen der hinteren Zone der Turbomaschine (20) und der hinteren Zone des Masts (30) derart eingerichtet zu sein, dass der Turbomaschine (20) nur Verschiebungs- und Rotationsbewegungen entlang der Längsachse (X) und Verschiebungs- und Rotationsbewegungen entlang einer vertikalen Achse (Z) und eine Rotationsbewegung entlang einer Querachse (Y) gestattet sind.

2. Anordnung nach Anspruch 1, wobei die Turbomaschine (20) eine glatte Achse (42) umfasst, die sich entlang der Längsachse (X) erstreckt, und der Mast (30) ein Langloch (44) aufweist, das entlang der Längsachse (Z) ausgerichtet ist, und wobei die Gleitzapfenverbindung durch die glatte Achse (42) der Turbomaschine (20) gebildet ist, die dazu konfiguriert ist, in dem Langloch (44) des Masts (30) zu gleiten.

3. Anordnung nach Anspruch 1, wobei der Mast (30) eine glatte Achse (42) umfasst, die sich entlang der Längsachse (X) erstreckt, und die Turbomaschine (20) ein Langloch (44) aufweist, das entlang der vertikalen (Z) ausgerichtet ist, und wobei die Gleitzapfenverbindung durch die glatte Achse (42) das Masts (30) gebildet ist, die dazu konfiguriert ist, in dem Langloch (44) der Turbomaschine (20) zu gleiten.

4. Anordnung nach einem der Ansprüche 2 oder 3, wobei das Langloch (44) der Turbomaschine (20) oder des Masts (30) rechteckig oder länglich ist.

5. Anordnung nach einem der Ansprüche 2 bis 4, die mechanische Anschläge( (50) umfasst, die an den Enden der glatten Achse (42) der Turbomaschine (20) oder des Masts (30) eingerichtet sind.

6. Anordnung nach einem der Ansprüche 2 bis 5, die elastische Mittel (60) umfasst, die dazu konfiguriert sind, eine Kraft entlang der Querachse (Y) auf der glatten Achse (42) der Turbomaschine (20) oder des Masts (30) auszuüben.

7. Anordnung nach einem der Ansprüche 2 bis 6, wobei die glatte Achse (42) mindestens zwei konzentrische Rohre umfasst.

8. Anordnung nach einem der Ansprüche 1 bis 7, die einen vorderen Träger (80) umfasst, der dazu konfiguriert ist, die vordere Zone der Turbomaschine (20) mit der vorderen Zone des Masts (30) zu verbinden, wobei der vordere Träger (80) Aufhängungsgabeln (82, 84) umfasst, die sich entlang der Querachse (Y) und der vertikalen Achse (Z) erstrecken, wobei sich Schwingen (86) entlang der Querachse (Y) und der vertikalen Achse (Z) erstrecken und eine Gelenkverbindung mit den Aufhängungsgabeln (82, 84) bilden, wobei die Schwingen (86) in die Aufhängungsgabeln (82, 84) eingesetzt sind und von Achsen, die sich gemäß der Längsachse X erstrecken, durchquert sind.

9. Antriebseinheit eines Luftfahrzeugs, die eine Turbomaschine (20) mit Längsachse (X) umfasst, wobei die Turbomaschine (20) eine vordere und eine hintere Längszone umfasst, wobei die Antriebseinheit auch eine Anordnung nach einem der Ansprüche 1 bis 8 und eine Abdeckung (70), die um die Turbomaschine (20) eingerichtet ist, umfasst, wobei die Abdeckung (70) fest mit der Turbomaschine (20) derart verbunden ist, dass eine Bewegung der Turbomaschine (20) eine Bewegung der Abdeckung (70) nach sich zieht.

10. Luftfahrzeug, das eine Anordnung nach einem der Ansprüche 1 bis 8 oder eine Antriebseinheit nach Anspruch 9 umfasst.

## Claims

1. An assembly to be positioned between an aircraft pylon (30) and a turbomachine (20) of longitudinal axis (X), the pylon (30) and the turbomachine (20) each comprising front and rear longitudinal areas, the assembly comprising a rear support (40) configured to connect the rear area of the turbomachine (20) to the rear area of the pylon (30), the rear support (40) comprising a sliding pivot connection to be arranged between the rear area of the turbomachine (20) and the rear area of the pylon (30) so as to allow the turbomachine (20) only translational and rotational movements along the longitudinal axis (X) and translational and rotational movements along a vertical axis (Z) and a rotational movement along a transverse axis (Y).

2. The assembly of claim 1, wherein the turbomachine (20) comprises a smooth axle (42) extending along the longitudinal axis (X), and the pylon (30) has a slot (44) oriented along the vertical axis (Z), and wherein the sliding pivot connection is formed by the smooth axle (42) of the turbomachine (20) being configured to slide in the slot (44) of the pylon (30).

3. The assembly of claim 1, wherein the pylon (30) comprises a smooth axle (42) extending along the longitudinal axis (X), and the turbomachine (20) has a slot (44) oriented along the vertical axis (Z), and wherein the sliding pivot connection is formed by the smooth axle (42) of the pylon (30) being configured to slide in the slot (44) of the turbomachine (20).

4. The assembly of any of claims 2 or 3, wherein the slot (44) of the turbomachine (20) or of the pylon (30) is rectangular or oblong in shape.

5. The assembly according to one of claims 2 to 4, comprising mechanical stops (50) arranged at the ends of the smooth axle (42) of the turbomachine (20) or of the pylon (30).

6. The assembly according to one of claims 2 to 5, comprising elastic means (60) configured to exert a force along the transverse axis (Y) on the smooth axle (42) of the turbomachine (20) or of the pylon (30).

7. The assembly of any of claims 2 to 6, wherein the smooth axle (42) comprises at least two concentric tubes.

8. The assembly according to any one of claims 1 to 7, comprising a front support (80) configured to connect the front area of the turbomachine (20) to the front area of the pylon (30), the front support (80) comprising suspension clevises (82, 84) extending along the transverse axis (Y) and the vertical axis (Z), and links (86) extending along the transverse axis (Y) and the vertical axis (Z) and forming an articulated connection with the suspension clevises (82, 84), the links (86) being inserted into the suspension clevises (82, 84) and passed through by axles extending along the longitudinal axis (X).

9. A propulsion assembly for an aircraft comprising a turbomachine (20) of longitudinal axis (X), the turbomachine (20) comprising front and rear longitudinal areas, the propulsion assembly also comprising an assembly according to one of claims 1 to 8 and a cover (70) arranged around the turbomachine (20), the cover (70) being secured to the turbomachine (20) so that a movement of the turbomachine (20) causes a movement of the cover (70).

10. An aircraft comprising an assembly according to any of claims 1 to 8 or a propulsion assembly according to claim 9.
